# EUROPEAN PATENT SPECIFICATION

(11) **EP 3 115 699 B1**
(45) Date of publication and mention of the grant of the patent: **01.05.2019**
(21) Application number: 16176094.7
(22) Date of filing: 24.06.2016
(51) Int. Cl.: F25B 30/02, F24D 17/00, F24D 19/10, F24H 4/04, F24D 3/08, F24D 3/18

(54) **HEAT PUMP HOT WATER APPARATUS**
WÄRMEPUMPENWARMWASSERVORRICHTUNG
APPAREIL D'EAU CHAUDE À POMPE À CHALEUR

(30) Priority: 08.07.2015 JP 2015136581
(43) Date of publication of application: 11.01.2017
(73) Proprietor: Panasonic Intellectual Property Management Co., Ltd., Osaka-shi, Osaka 540-6207 (JP)
(72) Inventor: TAKIZAWA, Sadahiro, Osaka, 540-6207 (JP); FUJIMOTO, Takanobu, Osaka, 540-6207 (JP)
(74) Representative: Eisenführ Speiser

(56) References cited:
- EP-A1- 2 402 687
- EP-A1- 2 669 605
- EP-A1- 2 677 251
- EP-A2- 2 362 164
- WO-A1-2014/002133
- JP-A- 2004 257 650
- JP-A- 2005 127 588
- JP-A- 2011 047 607
- US-A1- 2005 155 364

## Description

### BACKGROUND

### 1. Technical Field

The present disclosure relates to a heat pump hot water apparatus.

### 2. Description of the Related Art

Conventionally, there has been known a heat pump hot water apparatus that heats water in a hot water storing tank by an indirect heating scheme. In the conventional heat pump hot water apparatus, a heat pump heats water. A circulation pump operates to transfer the hot water heated by the heat pump at a certain flow rate. The hot water exchanges heat with water in a hot water storing tank at a heat exchanger (coil) provided in the hot water storing tank. Thus, the water in the hot water storing tank is heated.

FIG. 5 shows a conventional heat pump hydronic heater disclosed in Unexamined Japanese Patent Publication No. 2013-160467.

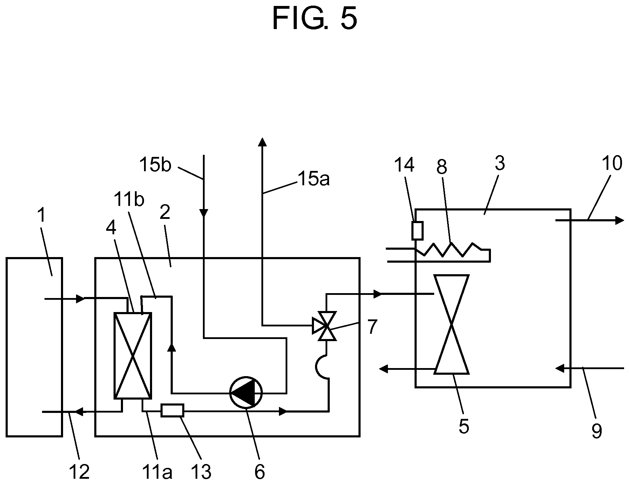

As shown in FIG. 5, the conventional heat pump hot water apparatus includes heat pump heat source 1, water-refrigerant heat exchanger 4 that allows a refrigerant heated by heat pump heat source 1 and water to exchange heat with each other, circulation pump 6 that causes the high-temperature circulating water heated at water-refrigerant heat exchanger 4 to circulate, hot water storing tank 3 that stores supply-hot water, and hot water supply heat exchanger 5 that allows the high-temperature circulating water and the supply-hot water to exchange heat with each other. Repetitive operations of heat pump heat source 1 heat the supply-hot water.

However, in the conventional structure, the circulation flow rate of hot water for heating the supply-hot water in hot water storing tank 3 is fixed. Accordingly, when the temperature of the supply-hot water in hot water storing tank 3 is low, much time is taken to heat the supply-hot water in hot water storing tank 3 at hot water supply heat exchanger 5. This poses a problem of poor heating efficiency.

Further, when the temperature of the supply-hot water in hot water storing tank 3 is high, since the circulation flow rate of hot water for heating the supply-hot water in hot water storing tank 3 is fixed, the temperature of water supplied to water-refrigerant heat exchanger 4 rises. This causes the pressure on the high pressure side of the heat pump cycle to reach the allowable working pressure, necessitating repetitive heating operations with breaks in the operation of heat pump heat source 1. As a result, much time is taken to heat the supply-hot water in hot water storing tank 3 at hot water supply heat exchanger 5. Again, this poses a problem of poor heating efficiency.

EP patent application 2 669 605 forming the closest prior art from which the present invention starts discloses a heat pump apparatus which includes a heat source unit that cools or heats a refrigerant, an indoor unit that performs a cooling operation, and a hot water supply unit that performs a hot water supply operation. When there is an operation request for one of the indoor unit and the hot water supply unit, even when there is no operation request for the other, the heat pump apparatus causes both the one and the other to operate if the other satisfies a certain condition so that the hot water supply unit performs a hot water supply operation by utilizing a refrigerant heated by performing a cooling operation in the indoor unit and the indoor unit performs a cooling operation by utilizing a refrigerant cooled by performing a hot water supply operation in the hot water supply unit.

Moreover, a refrigeration cycle device and refrigeration cycle control method can be inferred from EP patent application 2 677 251 wherein the refrigeration cycle mechanism has a compressor whose operating frequency can be controlled, a plate water-heat exchanger that heats water into hot water, a hot water supply pressure-reducing mechanism, and an outdoor heat exchanger. The controller includes a clock section, a computing section, a memory section, and a controlling section. The clock section measures time. The computing section calculates the actual hot water supply load, which represents the quantity of heat that has been supplied to the load side per unit time, and the heat stored in the hot water storage tank. The memory section stores information related to the hot water supply load calculated by the computing section. The controlling section controls the operating frequency of the compressor on the basis of the quantity of heat storage, the hot water supply load, and a preset hot water supply time. The control by the controller makes it possible to perform a hot water supply operation with high operation efficiency, and also avoid running out of hot water.

Furthermore, EP 2 362 164, JP 2009197839, WO2014/002133 and EP 2 402 687 disclose heat pump systems. In JP 2003048911, a water heater is described.

### SUMMARY

The present disclosure has been made to solve the conventional problem described above, and an object thereof is to provide an energy-efficient heat pump hot water apparatus with improved heating efficiency.

In order to solve the conventional problem described above, a heat pump hot water apparatus of the present disclosure includes: a heat pump cycle which includes a compressor, a radiator, decompressing means, and an evaporator connected to each other, and through which a refrigerant circulates, the radiator heating circulating water through heat exchange with the refrigerant; a hot water storing tank; a hot water storing tank-dedicated heat exchanger that allows the circulating water heated at the radiator and water in the hot water storing tank to exchange heat with each other; and a circulation pump that causes the circulating water to circulate between the radiator and the hot water storing tank-dedicated heat exchanger. The heat pump hot water apparatus further includes outlet temperature detecting means for detecting a temperature of the circulating water from the radiator; inlet temperature detecting means for detecting a temperature of the circulating water to the radiator; tank temperature detecting means for detecting a temperature of the water in the hot water storing tank; and a control apparatus. In accordance with a reduction in a difference between a target heating temperature of the water in the hot water storing tank and the temperature detected by the tank temperature detecting means during a heating operation of the compressor for heating the water in the hot water storing tank, the control apparatus is configured such that it adjusts a circulation amount of the circulating water so as to reduce a difference between the temperature detected by the outlet temperature detecting means and the temperature detected by the inlet temperature detecting means.

Thus, when the difference between the target heating temperature of the water in the hot water storing tank and the temperature detected by the tank temperature detecting means is great, that is, when the temperature of the water in the hot water storing tank is low, an increase in the difference between the temperature of hot water from the radiator and the temperature of water to the radiator can improve the heating efficiency. On the other hand, when the difference between the target heating temperature of the water in the hot water storing tank and the temperature detected by the tank temperature detecting means is small, that is, when the temperature of the water in the hot water storing tank has risen, a reduction in the difference between the temperature of the hot water from the radiator and the temperature of the water to the radiator can reduce the temperature difference between upper and lower parts of the water in the hot water storing tank.

That is, an energy-efficient heat pump hot water apparatus capable of reducing the temperature difference between upper and lower parts of the water in the hot water storing tank with improved heating efficiency can be provided.

According to the present disclosure, an energy-efficient heat pump hot water apparatus with improved heating efficiency can be provided.

### BRIEF DESCRIPTION OF THE DRAWINGS

FIG. 1 is a diagram showing the structure of a heat pump hot water apparatus according to a first exemplary embodiment of the present disclosure;
FIG. 2 is a diagram showing the difference between the temperature of hot water from a radiator and the temperature of water to the radiator, which difference is set based on the difference between the target heating temperature of a hot water storing tank and the temperature of the hot water storing tank;
FIG. 3 is a diagram showing the circulation amount of circulating water which is set based on the difference between the target heating temperature of the hot water storing tank and the temperature of the hot water storing tank;
FIG. 4 is a diagram showing the circulation amount of circulating water which is set based on the temperature of hot circulating water from the radiator; and
FIG. 5 is a diagram showing the structure of a conventional heat pump hot water apparatus.

### DETAILED DESCRIPTION

A heat pump hot water apparatus according to a first aspect of the present disclosure includes: a heat pump cycle which includes a compressor, a radiator, decompressing means, and an evaporator connected to each other, and through which a refrigerant circulates, the radiator heating circulating water through heat exchange with the refrigerant; a hot water storing tank; a hot water storing tank-dedicated heat exchanger that allows the circulating water heated at the radiator and water in the hot water storing tank to exchange heat with each other; and a circulation pump that causes the circulating water to circulate between the radiator and the hot water storing tank-dedicated heat exchanger. The heat pump hot water apparatus further includes: outlet temperature detecting means for detecting a temperature of the circulating water from the radiator; inlet temperature detecting means for detecting a temperature of the circulating water to the radiator; tank temperature detecting means for detecting a temperature of the water in the hot water storing tank; and a control apparatus. In accordance with a reduction in a difference between a target heating temperature of the water in the hot water storing tank and the temperature detected by the tank temperature detecting means during a heating operation of the compressor for heating the water in the hot water storing tank, the control apparatus adjusts a circulation amount of the circulating water so as to reduce a difference between the temperature detected by the outlet temperature detecting means and the temperature detected by the inlet temperature detecting means.

Thus, when the difference between the target heating temperature of the water in the hot water storing tank and the temperature detected by the tank temperature detecting means is great, that is, when the temperature of the water in the hot water storing tank is low, an increase in the difference between the temperature of hot water from the radiator and the temperature of water to the radiator can improve the heating efficiency. On the other hand, when the difference between the target heating temperature of the water in the hot water storing tank and the temperature detected by the tank temperature detecting means is small, that is, when the temperature of the water in the hot water storing tank has risen, a reduction in the difference between the temperature of the hot water from the radiator and the temperature of the water to the radiator can reduce the temperature difference between upper and lower parts of the water in the hot water storing tank.

That is, an energy-efficient heat pump hot water apparatus capable of reducing the temperature difference between upper and lower parts of the water in the hot water storing tank with improved heating efficiency can be provided.

According to a second aspect of the present disclosure, particularly in the first aspect, the control apparatus adjusts the circulation amount of the circulating water such that the difference between the temperature detected by the outlet temperature detecting means and the temperature detected by the inlet temperature detecting means falls within a prescribed value range.

Thus, the circulation amount of the circulating water is adjusted such that the difference between the temperature of hot water from the radiator and the temperature of water to the radiator falls within a prescribed value range, based on each of the cases where the difference between the target heating temperature of the water in the hot water storing tank and the temperature detected by the tank temperature detecting means is great and where the difference between the target heating temperature of the water in the hot water storing tank and the temperature detected by the tank temperature detecting means is small. As a result, the energy-efficient heat pump hot water apparatus with improved heating efficiency capable of further reducing the temperature difference between upper and lower parts of the water in the hot water storing tank can be provided.

According to a third aspect of the present disclosure, particularly in the first or second aspect, the control apparatus adjusts the circulation amount of the circulating water to be greater in accordance with an increase in the temperature detected by the outlet temperature detecting means.

Thus, by increasing the circulation amount of the circulating water in the case where the temperature of hot water from the water-refrigerant heat exchanger is high, that is, in the case where the target heating temperature of water in the hot water storing tank is high, the capacity of heating the water in the hot water storing tank can be increased. Thus, an operation of heating the water in the hot water storing tank can be finished in a short time period.

According to a fourth aspect of the present disclosure, particularly in one of the first to third aspects, flow rate detecting means for detecting the circulation amount of the circulating water is further included. The control apparatus adjusts the circulation amount of the circulating water by changing an operation of the circulation pump based on the flow rate detected by the flow rate detecting means.

Thus, the circulation amount of the circulating water, which is heated at the radiator by the refrigerant circulating through the heat pump cycle and which is circulating between the radiator and the hot water storing tank-dedicated heat exchanger, can be simply and precisely controlled.

### FIRST EXEMPLARY EMBODIMENT

Hereinafter, a description will be given of a first exemplary embodiment of the present disclosure with reference to the drawings. Note that, the exemplary embodiment does not limit the present disclosure.

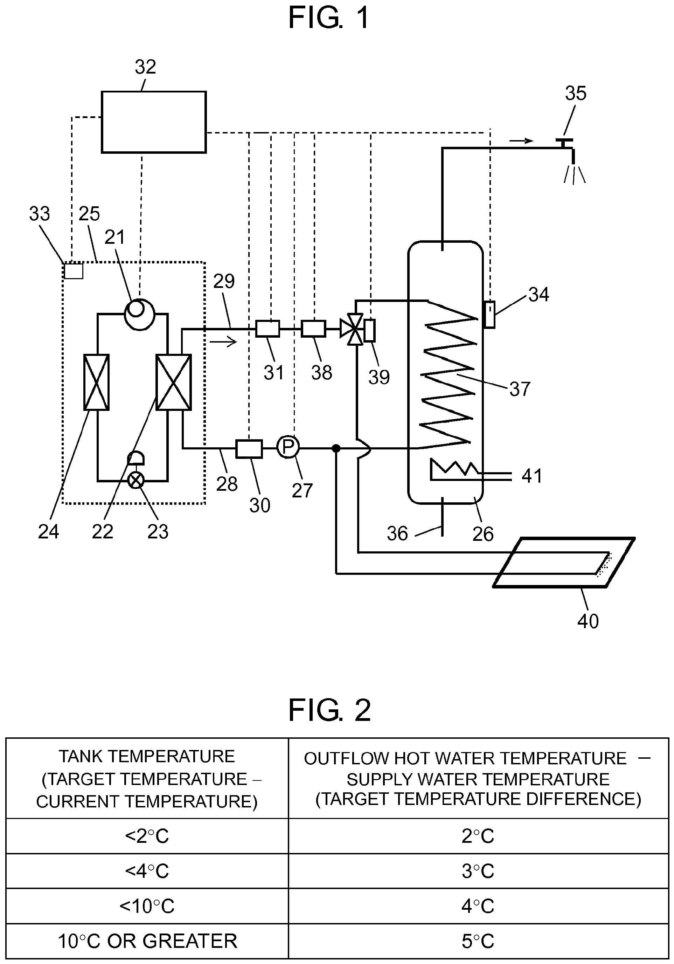

With reference to FIG. 1, the structure of a heat pump hot water apparatus according to the exemplary embodiment is described.

Heat pump cycle 25 is structured by compressor 21, radiator 22, decompressing means 23, and evaporator 24 connected to each other.

In heat pump cycle 25, compressor 21 compresses a refrigerant to high pressure and temperature, and sends the refrigerant to radiator 22. In the exemplary embodiment, the refrigerant is R410A. However, other refrigerant may be used.

Further, while radiator 22 is a heat exchanger structured by stacked stainless plates, it may be a heat exchanger structured by double copper pipes.

Circulation pump 27 sends circulating water to radiator 22 through heat source entrance pipe 28. At radiator 22, the refrigerant heated to high temperature and the circulating water sent to radiator 22 exchange heat with each other, whereby the circulating water is heated. That is, the circulating water is provided with heat by the refrigerant, and thus the circulating water of high temperature is produced.

The circulating water of high temperature passes through heat source exit pipe 29. In a space-heating mode, the circulating water is sent from three-way valve 39 into a building.

The circulating water of high temperature dissipates heat at floor heating panel 40 in the building. The circulating water having its heat dissipated is sent to evaporator 24 through heat source entrance pipe 28 by circulation pump 27, and receives heat from the air. Radiator 22, circulation pump 27, three-way valve 39, and control apparatus 32 such as a remote controller apparatus are incorporated in the same case, and are mainly disposed indoors.

In a space-heating mode, the temperature of the circulating water can be set by the remote controller, and is adjusted mainly in a range of 35°C to 55°C.

In a mode of heating water in hot water storing tank 26, the high-temperature circulating water produced at radiator 22 is sent from three-way valve 39 to hot water storing tank-dedicated heat exchanger 37 in hot water storing tank 26. Then, the high-temperature circulating water heats the water in hot water storing tank 26, to produce supply-hot water to be supplied from hot water supply pipe 35. By being switched, three-way valve 39 allows heat source exit pipe 29 and floor heating panel 40 in the building to communicate with each other in the space-heating mode, and allows heat source exit pipe 29 and hot water storing tank-dedicated heat exchanger 37 to communicate with each other in the mode of heating the water in hot water storing tank 26.

Hot water tank-dedicated heat exchanger 37 is structured by a spirally wound stainless or copper pipe, and fixed by welding to the interior of hot water storing tank 26. Hot water tank 26 is supplied with water from water supply pipe 36, and supplies supply-hot water from hot water supply pipe 35.

The temperature of the supply-hot water produced in hot water storing tank 26 can also be set by control apparatus 32 such as a remote controller apparatus, and is adjusted mainly in a range of 35°C to 75°C.

An operation of heating the water in hot water storing tank 26 (hereinafter also referred to as the hot water storing operation) starts when the difference between a temperature detected by tank temperature detecting means 34 provided at hot water storing tank 26 and a temperature set for the hot water in hot water storing tank 26 becomes equal to or smaller than a prescribed temperature (e.g., 8°C). The hot water storing operation stops when the temperature detected by tank temperature detecting means 34 becomes higher than a target heating temperature, when a discharge temperature of the heat pump cycle reaches a permissible value, or when a pressure value on the high pressure side of the heat pump cycle reaches a permissible value.

The discharge temperature of the heat pump cycle and the pressure value on the high pressure side are determined by the pressure- and temperature-withstanding characteristics of the components disposed in the heat pump cycle. When the temperature detected by tank temperature detecting means 34 is lower than the target heating temperature after the operation of the heat pump cycle (the operation of the compressor) is stopped, in-tank electric heater 41 is energized. Until the temperature detected by tank temperature detecting means 34 reaches the target heating temperature, in-tank electric heater 41 heats the water in hot water storing tank 26.

In-tank electric heater 41 is a sheathed heater, which is poor in thermal efficiency than the heat pump cycle. Accordingly, use of the heat pump cycle where possible in producing the supply-hot water can conserve much power.

Further, when the difference between the target heating temperature of the water in hot water storing tank 26 and the temperature detected by tank temperature detecting means 34 is great, that is, when the temperature of the water in hot water storing tank 26 is low, an increase in the difference between the temperature of hot water from radiator 22 and the temperature of water to radiator 22 can improve the heating efficiency. On the other hand, when the difference between the target heating temperature of the water in hot water storing tank 26 and the temperature detected by tank temperature detecting means 34 is small, that is, when the temperature of the water in hot water storing tank 26 has risen, a reduction in the difference between the temperature of the hot water from radiator 22 and the temperature of the water to radiator 22 can reduce the temperature difference between upper and lower parts of the water in hot water storing tank 26.

To this end, the flow rate of the circulating water should be set to a proper value. In order to achieve the setting, in the exemplary embodiment, while ultimately the target temperature of the hot water from radiator 22 becomes higher than the target heating temperature of the water in hot water storing tank 26, the target temperature of the hot water from radiator 22 is determined based on the temperature detected by tank temperature detecting means 34, and the capacity of circulation pump 27 is adjusted such that the temperature detected by outlet temperature detecting means 31 attains the target temperature of the hot water from radiator 22.

Further, the capacity of circulation pump 27 is adjusted such that the difference between the temperature detected by outlet temperature detecting means 31 and the temperature detected by inlet temperature detecting means 30 falls within a prescribed temperature difference range depending on the temperature detected by tank temperature detecting means 34.

The prescribed temperature difference may be determined by, for example, a correlation table shown in FIG. 2, or may be defined by a linear expression provided with upper and lower limits.

The difference between the temperature detected by outlet temperature detecting means 31 and the temperature detected by the inlet temperature detecting means 30 is to be adjusted so as to fall within a prescribed temperature difference range because the optimum circulation amount of circulating water differs depending on the temperature in hot water storing tank 26 and the heating capacity of heat pump cycle 25. As to the heating capacity of heat pump cycle 25, the following relationship is established: heating capacity = (temperature of water from radiator - temperature of water to radiator) × flow rate.

The heating capacity of heat pump cycle 25 can be estimated to some extent from the compressor and other components. In order to cause the circulating water to flow at a proper flow rate, the capacity of circulation pump 27 should be adjusted so as to realize a proper temperature difference between the outlet of radiator 22 and the inlet of radiator 22, as represented by the relationship: proper flow rate = heating capacity of heat pump cycle 25/proper temperature difference between the outlet and inlet of radiator 22.

Note that, as shown in FIG. 2, the proper temperature difference between the outlet and inlet of radiator 22 is determined by the difference between the target heating temperature and the temperature detected by tank temperature detecting means 34. Here, it is set such that, as the difference between the target heating temperature of the water in hot water storing tank 26 and the temperature detected by tank temperature detecting means 34 (also referred to as the first temperature difference) becomes smaller, the difference between the temperature detected by outlet temperature detecting means 31 and the temperature detected by inlet temperature detecting means 30 (also referred to as the second temperature difference) becomes smaller. When the first temperature difference is 10°C or greater, the second temperature difference is set to 5°C. On the other hand, when the first temperature difference is 2°C or greater and smaller than 4°C, the second temperature difference is set to 3°C. Further, when the first temperature difference is smaller than 2°C, the second temperature difference is set to 2°C.

Note that, the condition "the circulation amount of the circulating water is adjusted such that the second temperature difference becomes smaller as the first temperature difference becomes smaller" includes the condition in which, for example, just in relation to prescribed temperature sections where the first temperature difference is smaller than 2°C and where it is 2°C or greater and smaller than 4°C, "the circulation amount of the circulating water is adjusted such that the second temperature difference becomes smaller when the first temperature difference is smaller than when the first temperature difference is greater".

Next, a description will be given of a method for adjusting the capacity of circulation pump 27.

When the current temperature difference between the outlet and inlet of radiator 22 is smaller than the temperature difference set for the outlet and inlet of radiator 22 (hereinafter referred to as the target temperature difference), control apparatus 32 adjusts the capacity of circulation pump 27 to be smaller such that the current value approximates the target temperature difference.

Conversely, when the current temperature difference between the outlet and inlet of radiator 22 is greater than the target temperature difference, control apparatus 32 adjusts the capacity of circulation pump 27 to be greater such that the current value approximates the target temperature difference.

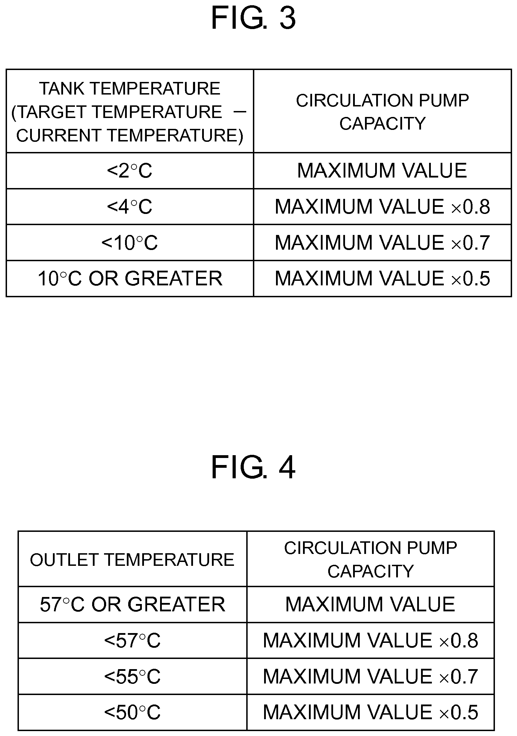

Further, in the case where flow rate detecting means 38 for detecting the circulating water amount is further included, control apparatus 32 adjusts the capacity of circulation pump 27 such that the target flow rate is achieved, based on the correlation for establishing the proper flow rate of the circulating water as shown in FIG. 3.

In this case, when the current flow rate is smaller than the target flow rate, control apparatus 32 adjusts the capacity of circulation pump 27 to be greater such that the current flow rate approximates the target flow rate. Conversely, when the current flow rate is greater than the target flow rate, control apparatus 32 adjusts the capacity of circulation pump 27 to be smaller such that the current flow rate approximates the target flow rate.

In this manner, provision of flow rate detecting means 38 for detecting the circulating water amount realizes quicker adjustment of the temperature difference between the outlet and inlet of radiator 22 to attain the target temperature difference.

In the structure including flow rate detecting means 38, after a hot water storing operation is started, when the temperature in hot water storing tank 26 approximates the target heating temperature, that is, when the temperature of the water in hot water storing tank 26 has risen, control apparatus 32 causes the flow rate to approximate the maximum flow rate as the temperature detected by outlet temperature detecting means 31 approximates the target heating temperature, as shown in FIG. 4.

The default maximum flow rate can be changed depending on the capacity of heat pump cycle 25.

In this manner, as the temperature detected by outlet temperature detecting means 31 approximates the target heating temperature, the capacity of the circulation pump is increased to increase the flow rate of the circulating water. This delays stop of the operation of heat pump cycle 25, and the temperature in hot water storing tank 26 is raised to higher temperatures by the operation of heat pump cycle 25. Thus, energy conservation is realized by a reduction in the energizing period of in-tank electric heater 41, and the amount of hot water usage can be increased.

As has been described, the heat pump hot water apparatus according to the present disclosure makes it possible to heat water in a hot water storing tank to higher temperatures while conserving energy, when the water in the hot water storing tank is to be heated by an indirect scheme. Accordingly, the heat pump hot water apparatus is applicable to a heat pump hot water apparatus having a hot water supplying function or a space heating function.

## Claims

1. A heat pump hot water apparatus comprising:
a heat pump cycle (25) which includes a compressor (21), a radiator (22), decompressing means (23), and an evaporator (24) connected to each other, and through which a refrigerant circulates, the radiator (22) heating circulating water through heat exchange with the refrigerant;
a hot water storing tank (26);
a hot water storing tank-dedicated heat exchanger (37) that allows the circulating water heated at the radiator (22) and water in the hot water storing tank (26) to exchange heat with each other;
a circulation pump (27) that causes the circulating water to circulate between the radiator (22) and the hot water storing tank-dedicated heat exchanger (37);
outlet temperature detecting means (31) for detecting a temperature of the circulating water from the radiator (22);
inlet temperature detecting means (30) for detecting a temperature of the circulating water to the radiator (22);
tank temperature detecting means (34) for detecting a temperature of the water in the hot water storing tank (26); and
a control apparatus (32),
**characterized in that**, in accordance with a reduction in a difference between a target heating temperature of the water in the hot water storing tank (26) and the temperature detected by the tank temperature detecting means (34) during a heating operation of the compressor (21) for heating the water in the hot water storing tank (26), the control apparatus (32) is configured such that it adjusts a circulation amount of the circulating water so as to reduce a difference between the temperature detected by the outlet temperature detecting means (31) and the temperature detected by the inlet temperature detecting means (30).

2. The heat pump hot water apparatus according to claim 1, wherein the control apparatus (32) is configured such that it adjusts the circulation amount of the circulating water such that the difference between the temperature detected by the outlet temperature detecting means (31) and the temperature detected by the inlet temperature detecting means (30) falls within a prescribed value range.

3. The heat pump hot water apparatus according to claim 1 or 2, wherein the control apparatus (32) is configured such that it adjusts the circulation amount of the circulating water to be greater in accordance with an increase in the temperature detected by the outlet temperature detecting means (31).

4. The heat pump hot water apparatus according to any one of claims 1 to 3 further comprising flow rate detecting means for detecting the circulation amount of the circulating water, wherein the control apparatus (32) is configured such that it adjusts the circulation amount of the circulating water by changing an operation of the circulation pump (27) based on a flow rate detected by the flow rate detecting means.

## Patentansprüche

1. Wärmepumpen-Warmwasservorrichtung enthaltend:
einen Wärmepumpenkreislauf (25), der einen Kompressor (21), einen Radiator (22), Dekompressionsmittel (23), und einen Verdampfer (24) beinhaltet, die miteinander verbunden sind, und durch welchen ein Kältemittel zirkuliert, wobei der Radiator (22) zirkulierendes Wasser durch Wärmeaustausch mit dem Kältemittel erwärmt;
einen Warmwasserspeichertank (26);
einen dem Warmwasserspeichertank zugeordneten Wärmetauscher (37), der dem zirkulierenden, am Radiator (22) erwärmten Wasser und Wasser im Warmwasserspeichertank (26) erlaubt, Wärme miteinander auszutauschen;
eine Zirkulationspumpe (27), die bewirkt, dass das zirkulierende Wasser zwischen dem Radiator (22) und dem dem Warmwasserspeichertank zugeordneten Wärmetauscher (37) zirkuliert;
Auslasstemperaturerfassungsmittel (31), um eine Temperatur des vom Radiator (22) zirkulierenden Wassers zu erfassen;
Einlasstemperaturerfassungsmittel (30), um eine Temperatur des zum Radiator (22) zirkulierenden Wassers zu erfassen,
Tanktemperaturerfassungsmittel (34), um eine Temperatur des Wassers im Warmwasserspeichertank (26) zu erfassen; und
eine Steuervorrichtung (32),
**dadurch gekennzeichnet, dass**, in Einklang mit einer Reduktion einer Differenz zwischen einer Sollheiztemperatur des Wassers im Warmwasserspeichertank (26) und der vom Tanktemperaturerfassungsmittel (34) ermittelten Temperatur während eines Heizvorgangs des Kompressors (21) zum Erhitzen des Wassers im Warmwassertank (26), die Steuervorrichtung (32) so ausgelegt ist, dass sie eine Zirkulationsmenge des zirkulierenden Wassers anpasst, um eine Differenz zwischen der vom Auslasstemperaturerfassungsmittel (31) erfassten Temperatur und der vom Einlasstemperaturerfassungsmittel (30) erfassten Temperatur zu reduzieren.

2. Wärmepumpen-Warmwasservorrichtung nach Anspruch 1, wobei die Steuervorrichtung (32) so ausgelegt ist, dass sie eine Zirkulationsmenge des zirkulierenden Wassers anpasst, so dass die Differenz zwischen der vom Auslasstemperaturerfassungsmittel (31) erfassten Temperatur und der vom Einlasstemperaturerfassungsmittel (30) erfassten Temperatur in einen vorbestimmten Wertebereich fällt.

3. Wärmepumpen-Warmwasservorrichtung nach Anspruch 1 oder 2, wobei die Steuervorrichtung (32) so ausgelegt ist, dass sie die Zirkulationsmenge des zirkulierenden Wassers so anpasst, dass diese in Einklang mit einem Anstieg der vom Auslasstemperaturerfassungsmittel (31) erfassten Temperatur größer wird.

4. Wärmepumpen-Warmwasservorrichtung nach einem der Ansprüche 1 bis 3, ferner ein Fördermengenerfassungsmittel umfassend, um die Zirkulationsmenge des zirkulierenden Wassers zu erfassen, wobei die Steuereinrichtung (32) so ausgelegt ist, dass sie auf der Grundlage einer vom Fördermengenerfassungsmittel erfassten Fördermenge die Zirkulationsmenge des zirkulierenden Wassers durch Ändern eines Betriebs der Zirkulationspumpe (27) anpasst.

## Revendications

1. Appareil d'eau chaude à pompe à chaleur comprenant:
un cycle de pompe à chaleur (25) qui inclut un compresseur (21), un radiateur (22), un moyen de décompression (23) et un évaporateur (24) reliés les uns aux autres, et à travers lequel circule un réfrigérant, le radiateur (22) chauffant l'eau de circulation par échange de chaleur avec le réfrigérant;
un réservoir de stockage d'eau chaude (26);
un échangeur de chaleur dédié au réservoir de stockage d'eau chaude (37) qui permet à l'eau de circulation chauffée au niveau du radiateur (22) et à l'eau dans le réservoir de stockage d'eau chaude (26) d'échanger de la chaleur l'une avec l'autre;
une pompe de circulation (27) qui fait circuler l'eau de circulation entre le radiateur (22) et l'échangeur de chaleur dédié au réservoir de stockage d'eau chaude (37);
un moyen de détection de température de sortie (31) pour détecter une température de l'eau de circulation provenant du radiateur (22);
un moyen de détection de température d'entrée (30) pour détecter une température de l'eau de circulation vers le radiateur (22);
un moyen de détection de température de réservoir (34) pour détecter une température de l'eau dans le réservoir de stockage d'eau chaude (26); et
un appareil de commande (32),
**caractérisé en ce que**, en fonction d'une réduction d'une différence entre une température de chauffage cible de l'eau dans le réservoir de stockage d'eau chaude (26) et la température détectée par le moyen de détection de température de réservoir (34) pendant une opération de chauffage du compresseur (21) pour chauffer l'eau dans le réservoir de stockage d'eau chaude (26), l'appareil de commande (32) est configuré de telle sorte qu'il ajuste une quantité de circulation de l'eau de circulation de façon à réduire une différence entre la température détectée par le moyen de détection de température de sortie (31) et la température détectée par le moyen de détection de température d'entrée (30).

2. Appareil d'eau chaude à pompe à chaleur selon la revendication 1, dans lequel l'appareil de commande (32) est configuré de telle sorte qu'il ajuste la quantité de circulation de l'eau de circulation de telle sorte que la différence entre la température détectée par le moyen de détection de température de sortie (31) et la température détectée par le moyen de détection de température d'entrée (30) tombe dans une plage de valeurs prescrite.

3. Appareil d'eau chaude à pompe à chaleur selon la revendication 1 ou 2, dans lequel l'appareil de commande (32) est configuré de telle sorte qu'il ajuste la quantité de circulation de l'eau de circulation pour qu'elle devienne plus importante en fonction d'une augmentation de la température détectée par le moyen de détection de température de sortie (31).

4. Appareil d'eau chaude à pompe à chaleur selon l'une quelconque des revendications 1 à 3 comprenant en outre un moyen de détection de débit pour détecter la quantité de circulation de l'eau de circulation, dans lequel l'appareil de commande (32) est configuré de telle sorte qu'il ajuste la quantité de circulation de l'eau de circulation en changeant un fonctionnement de la pompe de circulation (27) sur la base d'un débit détecté par le moyen de détection de débit.
